(19) Europäisches Patentamt
European Patent Office
Office européen des brevets

(11) **EP 2 905 939 B1**

(12) **EUROPEAN PATENT SPECIFICATION**

(45) Date of publication and mention
of the grant of the patent:
**17.04.2019 Bulletin 2019/16**

(51) Int Cl.:
*H04L 29/08* (2006.01)     *G06F 21/57* (2013.01)
*H04L 29/06* (2006.01)

(21) Application number: **15152800.7**

(22) Date of filing: **28.01.2015**

(54) **A method for determining an employee´s reconnaissance risk score**

Verfahren zur Bestimmung des Ausspähungsrisikofaktors eines Angestellten

Procédé permettant de déterminer un score de risque de reconnaissance d'un salarié

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.02.2014 IL 23087814**

(43) Date of publication of application:
**12.08.2015 Bulletin 2015/33**

(73) Proprietor: **Deutsche Telekom AG
53113 Bonn (DE)**

(72) Inventors:
• **Shabtai, Asaf
Ness Ziona (IL)**
• **Elovici, Yuval
D.N. LachIsh 7986400 (IL)**

(74) Representative: **Perani & Partners S.p.A.
Piazza Armando Diaz, 7
20123 Milano (IT)**

(56) References cited:
**WO-A1-2013/140410**

• **IASONAS POLAKIS ET AL: "Using social networks to harvest email addresses", PROCEEDINGS OF THE 9TH ANNUAL ACM WORKSHOP ON PRIVACY IN THE ELECTRONIC SOCIETY, WPES'10, 1 January 2010 (2010-01-01), page 11, XP055193857, New York, New York, USA DOI: 10.1145/1866919.1866922 ISBN: 978-1-45-030096-4**
• **ARVIND NARAYANAN ET AL: "Robust De-anonymization of Large Sparse Datasets", SECURITY AND PRIVACY, 2008. SP 2008. IEEE SYMPOSIUM ON, IEEE, PISCATAWAY, NJ, USA, 18 May 2008 (2008-05-18), pages 111-125, XP031259100, ISBN: 978-0-7695-3168-7**

## Description

### Field of the Invention

The invention is from the field of computer security. Specifically the invention is from the field of preventing Advanced Persistent Threat (APT) attacks on the computers of an organization's employees.

### Background of the Invention

One of the key elements for a successful Advanced Persistent Threat (APT) attack is the reconnaissance phase, during which the attacker attempts to gain as much information as possible on his/her attack subject. Such information is mostly collected from public sources and without direct interaction with the target, and may include data about internal network elements (e.g., IP addresses range, domain names) and employees. The present invention focuses on APTs that try to identify employees in organizations that are very close to an asset of interest. Once the attacker identifies the employee or employees their computers will be attacked. In many cases the attack involves sending an email that contains (or directs the receiver to) malicious content, for example, spear-phishing attacks.

Internal evidence collected by a several companies has indicated a correlation between the level of exposure of employees in the open Web and the number of attack attempts on those employees. More specifically, employees having their name and role exposed in the Web (for example, in conference sites as presenters or in online social networks) experience more attack attempts in terms of phishing and targeted malicious emails (TME) [Amin, R.M., Ryan, J., and Dorp. "Detecting Targeted Malicious Email," IEEE Security & Privacy, vol. 10, no. 3, pp. 64-71, May-June, 2012].

The article by Isonas Polakis et al. "Using social networks to harvest email addresses", Proceedings of the 9th Annual ACM Workshop on Privacy in the Electronic Society, WPES '10, 1 January, 2010, page 11 shows how names extracted from social networks can be used to harvest email addresses as a first step for personalized phishing campaigns.

The article by Arvind Narayanan et al., "Robust De-anonymixation of Large Sparse Datasets", 2008 IEEE Symposium on Security and Privacy, 18 May, 2008, pages 111-125 demonstrates a method that can be used by an adversary who knows only a little bit about an individual user to easily identify this user's record in an internet dataset related to a service provider.

WO2013/140410 teaches a method for detecting spammers and fake profiles in social networks.

It would be a great advantage to an organization to know which of its employees could be vulnerable to such attacks in order to take effective counter measures before an attack is launched.

It is therefore a purpose of the present invention to provide an APT risk score for employees.

Further purposes and advantages of this invention will appear as the description proceeds.

### Summary of the Invention

The invention is a method that is implemented by dedicated software that provides a computer system with instructions for carrying out a series of steps to assign a reconnaissance risk score for an employee in an organization. After the following information has been input into the computer system:

    i. the name of a Web search engine;
    ii. the maximum number of search results;
    iii. the name of the employee; and
    iv. a lexicon;

the computer system automatically executes the following steps:

    a. searches the internet to obtain a first list containing URLs each containing the name of the employee;
    b. parses the URLs in the first list and searches each URL in the first list for the subset of terms from the lexicon found in each URL in the first list;
    c. performs a *reverse-search* in the internet for the terms from the lexicon that were found in step "c" to obtain a second list of URLs;
    d. searches in the second list of URLs for the URLs in the first list of URLs;
    e. defines a reverse index for each URL in the first list of URLs, wherein the reverse index is the location of the URL in the second list of URLs;
    f. determines a risk score for each URL in the first list of URLs; and
    g. determines a reconnaissance risk score for the employee.

The reconnaissance risk score for an employee that is determined according to the method of the invention provides an indication of the level of exposure of the employee on the Web.

The lexicon used to determine reconnaissance risk score for an employee according to the method of the invention is a contextual lexicon that contains a list of words that are assumed to be used by an attacker that is interested in the specific employee.

According to the method of the invention the risk score for each URL in the first list of URLs is determined from:

$$u_i = \frac{1}{S_i} \cdot \left| T^{(i)} \right|$$

wherein,

$u_i$ = the ith URL in the first list;
$S_i$ = the reverse index for $u_i$, and
$T^{(i)}$ = the subset of terms from the lexicon identified in $u_i$.

According to the method of the invention the reconnaissance risk score for an employee is determined from:

$$WebRecScore[e] = \sum_{|T^{(i)}| \geq 2} \frac{1}{S_i} \cdot \left| T^{(i)} \right|$$

wherein,

$e$ = the name of the employee;
$S_i$ = the reverse index for $u_i$, and
$T^{(i)}$ = the subset of terms from the lexicon identified in $u_i$.

All the above and other characteristics and advantages of the invention will be further understood through the following illustrative and non-limitative description of embodiments thereof, with reference to the appended drawings.

## Brief Description of the Drawings

- Fig. 1 schematically illustrates the threat model addressed by the invention;
- Fig. 2 schematically illustrates a simple implementation of the method of the invention; and
- Fig. 3 is a flow chart showing the steps of the method of the invention.

## Detailed Description of Embodiments of the Invention

The invention is a method that is implemented by dedicated software that provides a computer system with instructions for carrying out a series of steps that assign a reconnaissance risk score for each employee in an organization. The risk score assigned by the computer system indicates the level of exposure of an employee on the Web; or in other words, the effort that an attacker will have to invest, when searching the Web, in order to link a role/function in an organization with a real employee. Using the method of the invention, the security officer of the organization can warn highly exposed employees and direct monitoring efforts on these employees.

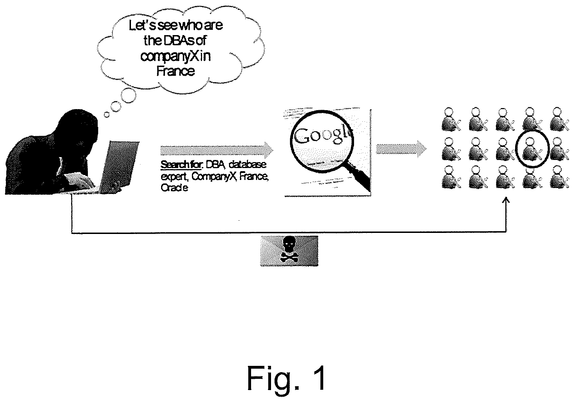

The method operates under the assumption that an attacker wants to find the real identity (i.e. the full name) of an employee by searching the Web. For example, the attacker would like to find the full name of the database administrator of company X located in France. In order to do this the attacker will submit different queries to a web search engine and will look for a Web page that reveals the name of Company X's database administrator. For example by searching the following keywords: DBA (Data Base Administrator), France, CompanyX, database, administrator, expert, Oracle, MSSQL, an attacker can manually inspect each page in the results and look for the real name of the administrator. This threat model is illustrated in Fig. 1.

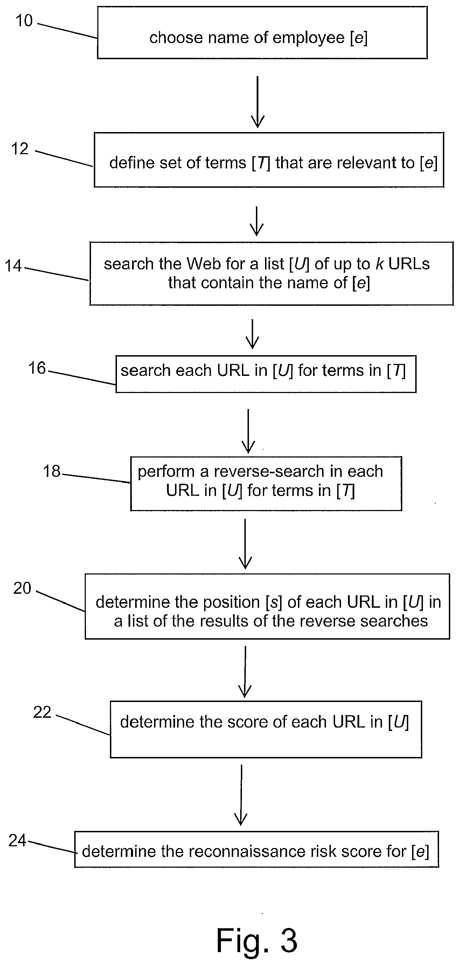

The method of the invention, which is schematically shown in the flow chart of Fig. 3, simulates the activity of an attacker by instructing the computer system to automatically perform the following search operations:

1. Given the full name of an employee (step 10), an internet search is carried out that returns a first list of the top $k$ (where $k$ is a configurable parameter) URLs, i.e., Web pages, containing the employee's name (step 14).

2. The system parses the content of each URL in the first list and searches in the $k$ URLs (step 16) for terms in a lexicon that is defined by the organization's security officer (step 12). This lexicon is a contextual lexicon that contains a list of terms that are assumed to be used by an attacker that is interested in the specific employee (e.g., company name, employee role...)

3. For each of the terms from the lexicon that was found in at least one of the $k$ URLs, the system performs a *reverse-search* in the Web using these terms (step 18).

4. The result of the *reverse-search* is a second list of URLs. A search is then made in this list for the URLs found in the original list (step 20). Note that the second list contains all of the URLs found by the search engine. This can be a very large number and therefore as a practical matter, the search in this step is carried out only for the first $m$ URLs ($m$ is configurable parameter, which may or may not be equal to $k$).

5. The reverse index of the URL is defined as the location of the URL (from the search for the employee's name) in the *reverse-search* result list (step 20).

6. A risk score (Equation 1 herein below) is determined for each URL in the original list (step 22).

7. A reconnaissance risk score (Equation 2 herein below) is determined for the employee (step 24.

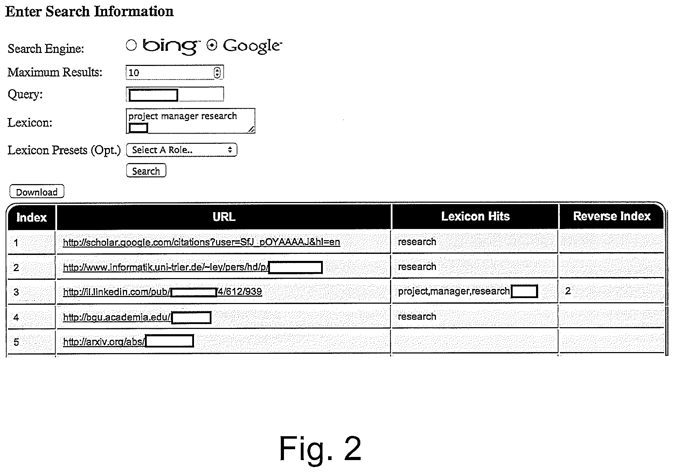

Fig. 2 schematically illustrates a simple implementation of the method of the invention. At the top of the figure the user configures the parameters she is interested in: 1) "Search Engine" = which search engine to use, e.g. Bing or Google; 2) "Maximum Results" = the maximum number of URLs containing the name of the employee to evaluate; 3) "Query" = the name of the employee for whom she would like to derive the Web reconnaissance risk score; and 4) "Lexicon" = the lexicon that is most relevant for the employee. In embodiments of the invention the lexicon can be selected from a predefined list ("Lexicon Presets") and manually modified.

At the bottom of the figure is a result table showing the first five results of the search for a specific employee. In the result table the first column ("Index") is the position of the URL in the result list returned by the search engine, the second column ("URL") is the name of the URL in which the employees name appears, the third column ("Lexicon Hits") is a list of the terms from the lexicon that appear in the URL, and the fourth column ("Reverse Index") shows the position of the URL in the result list returned by the search engine for the *reverse-search.* Note that lack of a reverse index for a URL in the table of Fig. 2 indicates that the URL did not appear in the first $m$ results in the second list returned by the search engine.

Let,

$e$ = the employee for whom the risk score is to be computed;
$T=\{t_1, t_2, ..., t_n\}$ - set of terms that are assumed to be used by the attacker for searching the name of the relevant employee, i.e. the "Lexicon" in the example shown in Fig. 2;
$U=\{u_1, u_2, ..., u_k\}$ - the list of top $k$ URLs containing the name of employee $e$ returned by the search engine, i.e. the column labeled "URL" in the example shown in Fig. 2;
$T^{(i)} \subseteq T$- is the subset of terms identified in $u_i$, i.e. the column labeled "Lexicon Hits" in the example shown in Fig. 2; and
$S_i$ - the position of $u_i$ in the search result list of the query containing the terms in $T^{(i)}$ (the *reverse-search*), i.e. the column labeled "Reverse Index" in the example shown in Fig. 2

Note that $u_i$ having $|T^{(i)}|$ >0 means that the $u_i$ Web page links the name of the employee with at least one of the key terms specified in $T$ and therefore might provide useful information for the attacker.

Then the risk score for $u_i$ is defined as:

$$\text{risk score } u_i = \frac{1}{S_i} \cdot \left| T^{(i)} \right| \qquad \qquad \text{Equation 1}$$

This score takes into consideration the following parameters: (1) the position of each URL in the "reverse search" - a URL in a higher position is assumed to be more difficult to be identified by the attacker; and (2) the number of terms identified in the URL - more terms means a higher chance that the URL refers to the employee of interest.

The reconnaissance risk score for employee e (WebRecScore[e]) is defined to be the sum of the scores for all URLs in *U* containing the name of the employee and at least two (the inventors have found that URLs with only one term frequently are not be related to the employee) of the key terms specified in *T*.

$$WebRecScore[e] = \sum_{|T^{(i)}|\geq 2} \frac{1}{S_i} \cdot \left|T^{(i)}\right| \qquad \text{Equation 2}$$

Although embodiments of the invention have been described by way of illustration, it will be understood that the invention may be carried out with many variations, modifications, and adaptations, without exceeding the scope of the claims.

**Claims**

1. A method that is implemented by dedicated software that provides a computer system with instructions for carrying out a series of steps to assign a reconnaissance risk score for an employee in an organization, wherein, after the following information has been input into the computer system:

    i. the name of a Web search engine;
    ii. the maximum number of search results;
    iii. the name of the employee (10); and
    iv. a lexicon (12);

    the computer system automatically executes the following steps:

    a. searches the internet to obtain a first list containing URLs each containing the name of the employee (14);
    b. parses the URLs in the first list and searches each URL in the first list for the subset of terms from the lexicon found in each URL in the first list (16);
    c. performs a *reverse-search* in the internet for the terms from the lexicon that were found in step "c" to obtain a second list of URLs (18);
    d. searches in the second list of URLs for the URLs in the first list of URLs (20);
    e. defines a reverse index for each URL in the first list of URLs, wherein the reverse index is the location of the URL in the second list of URLs (20);
    f. determines a risk score for each URL in the first list of URLs (22); and
    g. determines a reconnaissance risk score for the employee (24); the method **characterized in that** the risk score assigned by the computer system to an employee indicates the level of exposure of an employee on the Web and the security officer of the organization can use the reconnaissance risk scores to warn highly exposed employees and to direct monitoring efforts on the computers of these employees.

2. The method of claim 1, wherein the lexicon is a contextual lexicon that contains a list of words that are assumed to be used by an attacker that is interested in the specific employee.

3. The method of claim 1, wherein the risk score for each URL in the first list of URLs is determined from:

$$u_i = \frac{1}{S_i} \cdot \left|T^{(i)}\right|$$

wherein,

    $u_i$ = the ith URL in the first list;
    $S_i$ = the reverse index for $u_i$; and
    $T^{(i)}$ = the subset of terms from the lexicon identified in $u_i$.

4. The method of claim 1, wherein the reconnaissance risk score for an employee is determined from:

$$WebRecScore[e] = \sum_{|T^{(i)}| \geq 2} \frac{1}{S_i} \cdot \left| T^{(i)} \right|$$

wherein,

> $e$ = the name of the employee;
> $S_i$ = the reverse index for $u_i$; and
> $T^{(i)}$ = the subset of terms from the lexicon identified in $u_i$.

**Patentansprüche**

1. Verfahren, das durch dedizierte Software implementiert wird, die einem Computersystem Befehle zum Durchführen einer Reihe von Schritten zum Zuweisen eines Ausspähungsrisikofaktors für einen Angestellten in einer Organisation bereitstellt, wobei, nachdem die folgenden Informationen in das Computersystem eingegeben wurden:

   > i. der Name einer Web-Suchmaschine;
   > ii. die Höchstanzahl von Suchergebnissen;
   > iii. der Name des Angestellten (10); und
   > iv. ein Lexikon (12);

   das Computersystem automatisch die folgenden Schritte ausführt:

   > a. Durchsuchen des Internets, um eine erste Liste zu erhalten, die URLs enthält, die jeweils den Namen des Angestellten enthalten (14);
   > b. Parsen der URLs in der ersten Liste und Durchsuchen jeder URL in der ersten Liste nach der in jeder URL in der ersten Liste gefundenen Teilmenge von Begriffen von dem Lexikon (16);
   > c. Durchführen einer *Rückwärtssuche* nach den Begriffen von dem Lexikon, die im Schritt "c" gefunden wurden, im Internet, um eine zweite Liste von URLs zu erhalten (18);
   > d. Suchen nach den URLs in der ersten Liste von URLs in der zweiten Liste von URLs (20);
   > e. Definieren eines Reverse-Index für jede URL in der ersten Liste von URLs, wobei der Reverse-Index die Stelle der URL in der zweiten Liste von URLs ist (20);
   > f. Bestimmen eines Risikofaktors für jede URL in der ersten Liste von URLs (22); und
   > g. Bestimmen eines Ausspähungsrisikofaktors für den Angestellten (24);

   wobei das Verfahren **dadurch gekennzeichnet ist, dass** der einem Angestellten durch das Computersystem zugewiesene Risikofaktor den Grad der Gefährdung eines Angestellten im Web angibt und der Sicherheitsbeauftragte der Organisation die Ausspähungsrisikofaktoren verwenden kann, um hoch gefährdete Angestellte zu warnen und um Überwachungsbemühungen auf die Computer dieser Angestellten zu richten.

2. Verfahren nach Anspruch 1, wobei das Lexikon ein kontextuelles Lexikon ist, das eine Liste von Wörtern enthält, von denen angenommen wird, dass sie durch einen Angreifer verwendet werden, der sich für den spezifischen Angestellten interessiert.

3. Verfahren nach Anspruch 1, wobei der Risikofaktor für jede URL in der ersten Liste von URLs von Folgendem bestimmt wird:

$$u_i = \frac{1}{S_i} \cdot \left| T^{(i)} \right|$$

wobei

> $u_i$ = die i-te URL in der ersten Liste ist;
> $S_i$ = der Reverse-Index für $u_i$; und
> $T^{(i)}$ = die in $u_i$ identifizierte Teilmenge von Begriffen von dem Lexikon.

**4.** Verfahren nach Anspruch 1, wobei der Ausspähungsrisikofaktor für einen Angestellten von Folgendem bestimmt wird:

$$WebRecscore[e] = \sum_{|T^{(i)}| \geq 2} \frac{1}{S_i} \cdot \left| T^{(i)} \right|$$

wobei

$e$ = der Name des Angestellten;
$S_i$ = der Reverse-Index für $u_i$; und
$T^{(i)}$ = die in $u_i$ identifizierte Teilmenge von Begriffen von dem Lexikon.

**Revendications**

**1.** Procédé qui est mis en oeuvre par un logiciel dédié qui fournit à un système informatique des instructions pour exécuter une série d'étapes pour attribuer une cote de risque de reconnaissance pour un salarié dans une organisation, dans lequel, après que les informations suivantes ont été saisies dans le système informatique :

i. le nom d'un moteur de recherche Web ;
ii. le nombre maximal de résultats de recherche ;
iii. le nom du salarié (10) ; et
iv. un lexique (12) ;

le système informatique exécute automatiquement les étapes suivantes :

a. la recherche sur Internet pour obtenir une première liste contenant des URL contenant chacun le nom du salarié (14) ;
b. l'analyse syntaxique des URL dans la première liste et la recherche de chaque URL dans la première liste pour le sous-ensemble de termes provenant du lexique trouvé dans chaque URL dans la première liste (16) ;
c. l'exécution d'une *recherche inverse* sur Internet pour les termes provenant du lexique qui ont été trouvés dans l'étape « c » pour obtenir une deuxième liste d'URL (18) ;
d. la recherche dans la deuxième liste d'URL pour les URL dans la première liste d'URL (20) ;
e. la définition d'un indice inverse pour chaque URL dans la première liste d'URL, dans lequel l'indice inverse est l'emplacement de l'URL dans la deuxième liste d'URL (20) ;
f. la détermination d'une cote de risque pour chaque URL dans la première liste d'URL (22) ; et
g. la détermination d'une cote de risque de reconnaissance pour le salarié (24) ;

le procédé étant **caractérisé en ce que** la cote de risque attribuée par le système informatique à un salarié indique le niveau d'exposition d'un salarié sur le Web et l'agent de sécurité de l'organisation peut utiliser les cotes de risque de reconnaissance pour avertir des salariés fortement exposés et pour diriger des efforts de surveillance sur les ordinateurs de ces salariés.

**2.** Procédé selon la revendication 1, dans lequel le lexique est un lexique contextuel qui contient une liste de mots qui sont supposés être utilisés par un agresseur qui est intéressé par le salarié spécifique.

**3.** Procédé selon la revendication 1, dans lequel la cote de risque pour chaque URL dans la première liste d'URL est déterminée à partir de :

$$u_i = \frac{1}{S_i} \cdot \left| T^{(i)} \right|$$

dans lequel

$u_i$ = l'i-ème URL dans la première liste ;

$Si$ = l'indice inverse pour $u_i$ ; and

$T^{(i)}$ = le sous-ensemble de termes provenant du lexique identifié dans $u_i$.

4. Procédé selon la revendication 1, dans lequel la cote de risque de reconnaissance pour un salarié est déterminée à partir de :

$$WebRecScore[e] = \sum_{|T^{(i)}| \geq 2} \frac{1}{S_i} \cdot |T^{(i)}|$$

dans lequel,

$e$ = le nom du salarié ;

$S_i$ = l'indice inverse pour $u_i$ ; et

$T^{(i)}$ = le sous-ensemble de termes provenant du lexique identifié dans $u_i$.

Fig. 1

**Enter Search Information**

Search Engine: ○ bing ⊙ Google

Maximum Results: [ 10 ⊕ ]

Query: [ ]

Lexicon: [ project manager research ]

Lexicon Presets (Opt.) [ Select A Role.. ⊕ ]

[ Search ]

[ Download ]

| Index | URL | Lexicon Hits | Reverse Index |
|-------|-----|--------------|---------------|
| 1 | http://scholar.google.com/citations?user=SfJ_pOYAAAAJ&hl=en | research | |
| 2 | http://www.informatik.uni-trier.de/~ley/pers/hd/p/[ ] | research | |
| 3 | http://il.linkedin.com/pub/[ ]4/612/939 | project,manager,research[ ] | 2 |
| 4 | http://bgu.academia.edu/[ ] | research | |
| 5 | http://arxiv.org/abs/[ ] | | |

# Fig. 2

10 — choose name of employee [e]

12 — define set of terms [T] that are relevant to [e]

14 — search the Web for a list [U] of up to k URLs that contain the name of [e]

16 — search each URL in [U] for terms in [T]

18 — perform a reverse-search in each URL in [U] for terms in [T]

20 — determine the position [s] of each URL in [U] in a list of the results of the reverse searches

22 — determine the score of each URL in [U]

24 — determine the reconnaissance risk score for [e]

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013140410 A

### Non-patent literature cited in the description

- **AMIN, R.M. ; RYAN, J. ; DORP.** Detecting Targeted Malicious Email. *IEEE Security & Privacy,* May 2012, vol. 10 (3), 64-71
- **ISONAS POLAKIS et al.** Using social networks to harvest email addresses. *roceedings of the 9th Annual ACM Workshop on Privacy in the Electronic Society, WPES '10,* 01 January 2010, 11
- **ARVIND NARAYANAN et al.** Robust De-anonymixation of Large Sparse Datasets. *2008 IEEE Symposium on Security and Privacy,* 18 May 2008, 111-125